# EUROPEAN PATENT SPECIFICATION

(11) **EP 3 550 138 B1**
(45) Date of publication and mention of the grant of the patent: **17.06.2020**
(21) Application number: 18165850.1
(22) Date of filing: 05.04.2018
(51) Int. Cl.: F03D 1/06

(54) **PULTRUDED FIBROUS COMPOSITE STRIP WITH SERIALLY FORMED TAPERED ENDS FOR WIND TURBINE ROTOR BLADE SPAR CAPS**
PULTRUDIERTE FASERVERBUNDSTREIFEN MIT SERIELL HERGESTELLTEN VERJÜNGTEN ENDEN FÜR WINDTURBINENROTORBLATTHOLMKAPPEN
BANDE COMPOSITE FIBREUSE PULTRUDÉE PRÉSENTANT DES EXTRÉMITÉS EFFILÉES FORMÉES EN SÉRIE POUR CAPUCHONS DE LONGERON DE PALE D'ÉOLIENNE

(43) Date of publication of application: 09.10.2019
(73) Proprietor: Siemens Gamesa Renewable Energy A/S, 7330 Brande (DK)
(72) Inventor: Girolamo, Donato, 9400 Nørresundby (DK)
(74) Representative: Aspacher, Karl-Georg

(56) References cited:
- US-A1- 2014 003 956
- US-A1- 2014 341 747
- US-A1- 2016 273 516

## Description

The present invention relates generally to wind turbines, and in particular, to a spar cap of a wind turbine rotor blade. More specifically, the present invention relates to pultruded unidirectional fibrous composite strips, spar caps having such pultruded unidirectional fibrous composite strips, and wind turbine blades having spar caps that have such pultruded unidirectional fibrous composite strips.

Dimensions of wind turbines and wind blades are ever increasing, and consequently are increasing the challenges to overcome during the manufacturing processes of such wind turbine rotor blades. Presently, preferred materials used to manufacture wind turbine rotor blades, hereinafter also referred to as the blades, are glass- and/or carbon-fibre reinforced plastics (CFRP) commonly referred to as "composites". Recent developments in the wind turbine industry have led to the introduction of pultruded unidirectional fibrous composite strips, i.e. pultruded strips of composite material having unidirectional fibers (UD) reinforcement, mostly in the spar cap constructions, which represent the main load carrying components of the rotor blades.

US 2014/0003956 A1 describes a reinforcement based on fibers and resin for a wind turbine blade, whereby the reinforcement is obtained by superposition of at least two parts obtained by pultrusion. An end of the reinforcement is forming stair steps. To combat the concentration of stresses and to limit the risks of delamination, a curved machining is initiated to eliminate the stair steps.
US 2016/0273516 A1 describes a reinforcement strip for a wind turbine blade. An end region of an upper surface of the strip is inclined downwardly, thereby defining a tapered end surface. The tapered end surface defines a substantially parabolic curve.

US 2014/341747 A1 describes a fiber-reinforced laminate object in the form of the blade of a wind turbine, wherein the blade of the wind turbine comprises a number of combined laminate layers. At least along a section of the at least one rim, the laminate layer is cut off taperingly through the thickness of the laminate layer, whereby the thickness of the laminate layer is reduced.

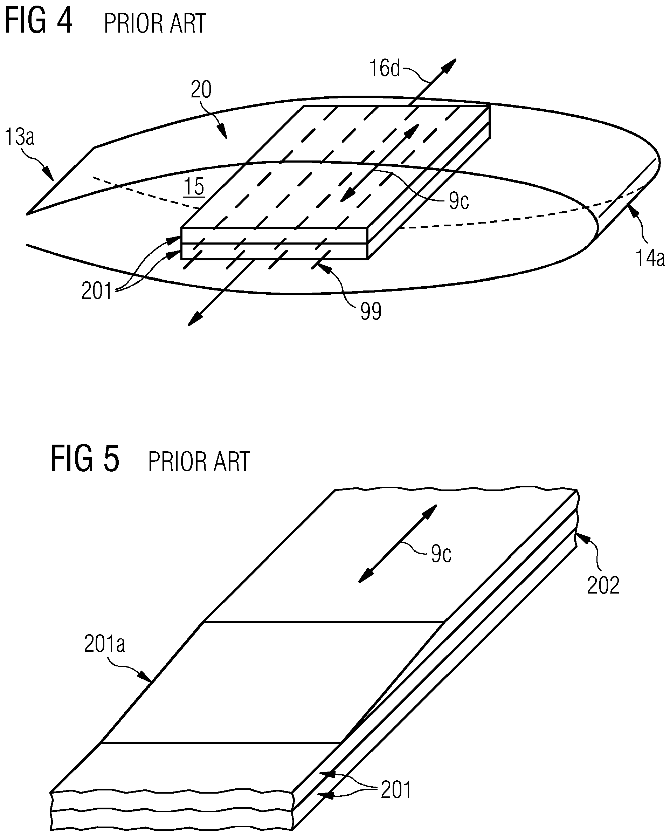

FIG 4 schematically shows a scheme of arrangement of such pultruded strips 201 in a spar cap (not shown in FIG 4) of a part of an airfoil 20 of a wind turbine rotor blade. The airfoil 20 of the blade has a leading edge 14a and a trailing edge 13a. Generally in the blade two or four spar caps are present, each two forming a pair separated in a flapwise direction of the blade by a web, and each running in spanwise direction 16d of the blade, although in FIG 4 for sake of simplicity only part of one such spar cap is schematically represented.

The conventionally known pultruded strip 201, hereinafter also referred to as the conventional strip 201 or profile 201 is defined by planar surfaces and generally resembles a longitudinally, i.e. along a longitudinal axis 9c of the conventional strip 201, elongated rectangular parallelepiped such as a bar or slab, and has a rectangular shaped cross-section when sectioned normally to the longitudinal axis 9c. Fibers 99 in the conventional strip 201, for example carbon fibers run along the longitudinal axis 9c of the strip 201. The length of such strip 201 is measured along its longitudinal axis 9c i.e. along the alignment of the fibers 99, the width is measured perpendicular to the length measurement and along the top or bottom planar surfaces of the strip 201, and the thickness is measured mutually perpendicular to the longitudinal axis 9c and to the width. Typical width and thicknesses of such strips 201 in spar caps vary respectively between 50 to 200 mm and 2 to 5 mm. Such conventional strips 201 of FIG 4 are stacked atop each other to form a stack of the conventional strips 201, although only two such strips 201 are shown in FIG 4, the number of strips 201 may differ and usually is greater than two.

The stack is resin infused to form the conventional spar cap which is then subsequently used as pre-formed structure in the blade shell formation where fiber mats are laid-up over and around the pre-fabricated spar cap and other parts of the blade mold to form the blade. Alternatively, the resin infusion and curing for shell formation of the blade, example VARTM (vacuum assisted resin transfer molding), is carried out for the strips 201 simultaneously along with forming the shell of the blade, by laying up fiber mats around the stack of the strips 201. The spar cap so formed is generally embedded in the shell of the blade. The strips 201 are arranged in the spar cap in such a way that the fibers 99 are aligned along the spanwise direction 16d of the blade.

One of the major downsides of using CFRP in form of conventional strip 201 arises from their longitudinal ends or abrupt terminations. Given the very large stiffness of the strip 201, even starting a 2mm thick profile with sharp edges, such as shown in FIG 4 introduces large stress concentrations in the shell where the edges contact the shell, and peel forces acting between the strips 201 that can be fatal to the structural integrity of the blade.

The aforementioned problem of abrupt terminations of the strips 201 may be addressed by tapering the thickness of the strips 201 in the longitudinal direction 9c as shown in FIG 5. However, conventionally tapered strips 201a have other problems. First the tapering angle is constant and usually small angles are chosen, in the order of 1:100-1:50. This makes the tapering regions very large, with the disadvantages of - firstly, consumables used in the machining process less durable; secondly, larger machined surfaces, exposed to potential environmental contamination (the un-machined surface of the profiles is usually protected by peel-ply removed just right before usage, but machining results in loss of peel ply); and thirdly, material wasted during machining.

Additionally, even choosing the solution represented in FIG 5 can introduce peel delaminating forces at the interface of the strip 201a. This phenomenon is accentuated when taking into account the machining tolerances of the tapering. These tolerances, that are necessary to accelerate the machining process and make it cheaper, can lead to a thickness drop at the strip 201a termination, as shown in FIG 5, in the range of 0-0.3mm.

The object of the present invention is thus to provide a pultruded fibrous composite strip for wind turbine spar caps that at least partially obviates the aforementioned three main problems of durability of consumables used in the machining process, potential environmental contamination, and wastage of material during machining. Furthermore, it is also desired that the pultruded fibrous composite strip reduces peel delaminating forces at the termination or edges of the strip in the blade.

The abovementioned objects are achieved by a pultruded fibrous composite strip according to claim 1 of the present technique, a spar cap according to claim 5 of the present technique, and a wind turbine rotor blade according to claim 7 of the present technique. Advantageous embodiments of the present technique are provided in dependent claims.

In the present technique, pultruded fibrous composite strip for a spar cap of a wind turbine rotor blade is presented, wherein the longitudinal ends or terminations are tapered similar to the conventional strip 201a of FIG 5 but unlike the conventional tapered strip 201a, the tapering of the strip of the present technique is not in constant angle, albeit the end has a series of tapered regions with varied angles.

In a first aspect of the present technique a pultruded fibrous composite strip for a spar cap of a wind turbine rotor blade is presented. The pultruded fibrous composite strip, hereinafter referred to as the strip, has a longitudinal axis and extends along the longitudinal axis, in other words the strip has an elongate structure. The strip has unidirectional fibers, for example carbon fibers, extending along the longitudinal axis, i.e. in longitudinal direction, of the strip. The strip has a first edge region and a second edge region i.e. the two ends of the elongate strip. The strip further has an intermediate region that separates, along the longitudinal direction of the strip, the first and the second edge regions. The intermediate region is defined by first and second mutually opposed longitudinally extending and parallelly disposed planar surfaces. In the strip, a thickness of the strip is determinable or measurable perpendicular to the first and the second planar surfaces whereas a width of the strip is determinable or measurable parallel to the first and the second planar surfaces and perpendicular to the longitudinal direction of the strip. In the strip, at least one of the first and the second edge regions includes at least a taper region and a further taper region. The taper region is disposed in-between the further taper region and the intermediate region. A constant slope of the further taper region is different than a constant slope of the taper region. Thus the strip does not have edges with steep gradient i.e. perpendicular edges, at its longitudinal ends as are present in conventionally known strips, and thus is devoid of the aforementioned problems presented by the conventionally known strips. Furthermore the strip of the present technique because of changing tapered regions in each edge region has reduced peel delaminating stresses at the profile termination or edge regions of the strip.

In an embodiment of the strip only one of the end regions is serially tapered, whereas in an alternate embodiment of the strip, each of the first and the second edge regions, is serially tapered, i.e. each of the first and the second edge regions includes the taper region and the further taper region.

In the strip of the present technique,the slope of the taper region is greater than the slope of the further taper region. Thus, the proposed design of the strip helps in reducing the extent of the taper surface since the tapering angles far from the tip (i.e. closer to the intermediate region) can be more aggressive than the once at the termination of the strip. In an embodiment of the strip, the slope of the taper region is between 1:75 and 1:25 and the slope of the further taper region is between 1:100 and 1:50.

In a second aspect of the present technique, a spar cap for a wind turbine rotor blade is presented. The spar cap comprises at least one pultruded fibrous composite strip, i.e. the strip, according to any of the embodiments of the aforementioned first aspect.

In a third aspect of the present technique, a wind turbine rotor blade is presented. The wind turbine rotor blade includes at least one spar cap. The spar cap comprises at least one pultruded fibrous composite strip, i.e. the strip, according to any of the embodiments of the aforementioned first aspect. The first and the second edge regions, as mentioned in the first aspect, are separated in a spanwise direction of the blade.

The aforementioned strip of the present technique has several advantages. First, since tapering of the longitudinal end or termination or edge region is not constant, but instead has tapered region with higher slope inserted in-between the intermediate region and the tapered regions of lower slope, the tapered end regions extend in the longitudinal direction lesser than the conventionally known tapered ends with constant taper in the entire end region, thus loss of volume is lesser and this wastage of material is reduced. Furthermore, lesser machining is required, which saves time and positively impacts durability of consumables used in the machining process. Furthermore, since the volume of the tapered region is less spread, lesser area has been machines and thus loss of peel-ply is lesser which in turn decreases potential environmental contamination. Finally, the smoother build-up of sectional laminate axial stiffness (defined as longitudinal stiffness by thickness) at the termination of the profile reduces the interlaminar shear stress and peel forces to be transferred through from the terminating profile to the underlying profile.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: schematically depicts a wind turbine having a wind turbine rotor blade in which a spar cap having a pultruded fibrous composite strip of the present technique may be incorporated;
- FIG 2: schematically depicts the wind turbine rotor blade in which a spar cap having a pultruded fibrous composite strip of the present technique may be incorporated;
- FIG 3: schematically shows an orientation of the spar cap having the strip of the present technique with respect to an airfoil of the blade of FIG 2;
- FIG 4: represents a prior art depicting a conventionally known strip without tapering on top of a similar strip and their orientation with respect to the blade of the wind turbine;
- FIG 5: represents a prior art depicting a conventionally known tapered strip arranged on top of one of the strips of FIG 4 and their orientation with respect to the blade of the wind turbine;
- FIG 6: schematically depicts location of tapered ends in the pultruded fibrous composite strip of the present technique arranged on top of a conventional strip and the orientation of the tapered ends with respect to the blade of the wind turbine;
- FIG 7: schematically depicts a tapered end in an exemplary embodiment of the pultruded fibrous composite strip of FIG 6 according to aspects of the present technique;
- FIG 8: schematically depicts the strip of FIG 7 arranged on top of a conventional strip;
- FIG 9: schematically depicts a side view of the exemplary embodiment of the pultruded fibrous composite strip of FIG 7 of the present technique; and
- FIG 10: schematically depicts a side view of another exemplary embodiment of the pultruded fibrous composite strip of the present technique as compared to FIG 7; in accordance with aspects of the present technique.

Hereinafter, above-mentioned and other features of the present technique are described in details. Various embodiments are described with reference to the drawing, wherein like reference numerals are used to refer to like elements throughout. In the following description, for the purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

It may be noted that in the present disclosure, the terms "first", "second", "third" etc. are used herein only to facilitate discussion, and carry no particular temporal or chronological significance unless otherwise indicated.

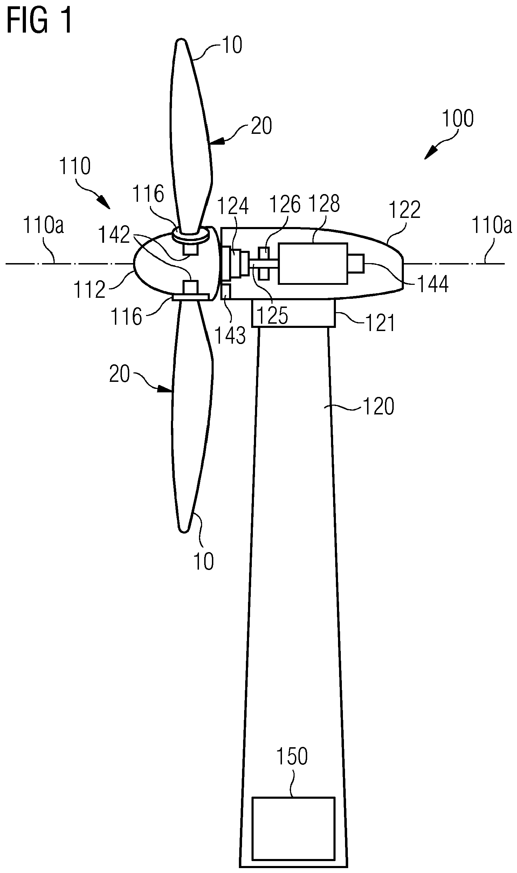

FIG 1 shows an exemplary embodiment of a wind turbine 100 of the present technique. The wind turbine 100 includes a tower 120, which is mounted on a fundament (not shown). A nacelle 122 is mounted on top of the tower 120 and rotatable with regard to the tower 120 by means of a yaw angle adjustment mechanism 121 such as yaw bearings and yaw motors. The yaw angle adjustment mechanism 121 functions to rotate the nacelle 122 around a vertical axis (not shown) referred to as a yaw axis, which is aligned with the longitudinal extension of the tower 120. The yaw angle adjustment mechanism 121 rotates the nacelle 122 during operation of the wind turbine 100 to ensure that the nacelle 122 is appropriately aligned with the current wind direction to which the wind turbine 100 is subjected.

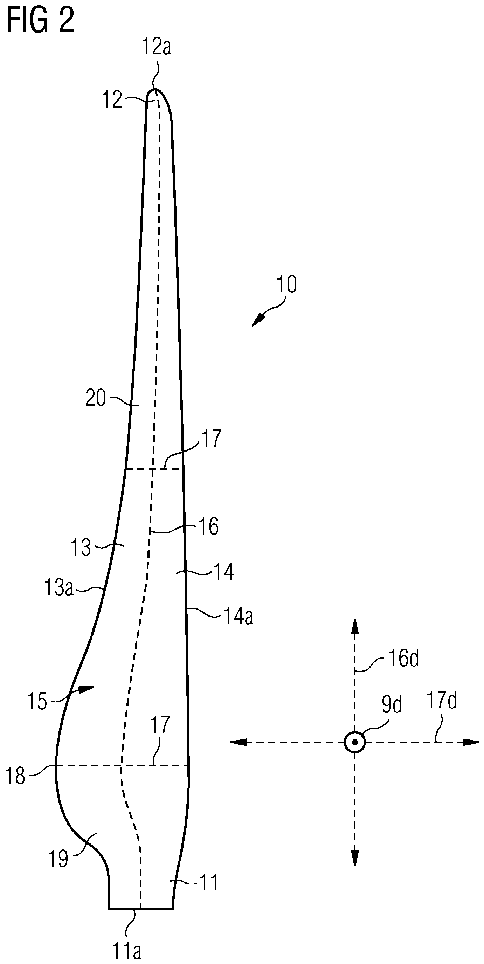

The wind turbine 100 further includes a rotor 110 having at least a rotor blade 10, and generally three rotor blades 10, although in the perspective view of FIG 1 only two rotor blades 10 are visible. One of the rotor blades 10 is schematically depicted in FIG 2. The rotor 110 is rotatable around a rotational axis 110a. The rotor blades 10, hereinafter also referred to as the blades 10 or as the blade 10 when referring to one of the blades 10, are generally mounted at a driving collar 112, also referred to as a hub 112. The hub 112 is mounted rotatable with regard to the nacelle 122 by means of a main bearing (not shown). The hub 112 is rotatable about the rotational axis 110a. Each of the blades 10 extends radially with respect to the rotational axis 110a and has an airfoil section 20.

In between the hub 112 and each of the rotor blades 10, is provided a blade adjustment mechanism 116 in order to adjust the blade pitch angle of the blade 10 by rotating the respective blade 10 about a longitudinal axis (not shown) of the blade 10. The longitudinal axis of each of the blade 10 is aligned substantially parallel with the longitudinal extension of the respective blade 10. The blade adjustment mechanism 116 functions to adjust blade pitch angles of the respective blade 10.

The wind turbine 100 includes a main shaft 125 that rotatably couples the rotor 110, particularly the hub 112, to a generator 128 housed within the nacelle 122. The hub 112 is connected to a rotor of the generator 128. In an exemplary embodiment (not shown) of the wind turbine 100, the hub 112 is connected directly to the rotor of the generator 128, thus the wind turbine 100 is referred to as a gearless, direct drive wind turbine 100. As an alternative, as shown in the exemplary embodiment of FIG 1, the wind turbine 100 includes a gear box 124 provided within the nacelle 122 and the main shaft 125 connects the hub 112 to the generator 128 via the gear box 124, thereby the wind turbine 100 is referred to as a geared wind turbine 100. Furthermore, a brake 126 is provided in order to stop the operation of the wind turbine 100 or to reduce the rotational speed of the rotor 110 for instance in case of a very strong wind and/or in case of an emergency.

The wind turbine 100 further includes a control system 150 for operating the wind turbine 100 at desired operational parameters. The wind turbine 100 may further include different sensors for example a rotational speed sensor 143, a power sensor 144, angle sensors 142, etc that provide inputs to the control mechanism 150 or other components of the wind turbine 100 to optimize operation of the wind turbine 100. Furthermore as shown in FIG 2, the rotor blade 10 includes a root section 11 having a root 11a and an airfoil section 20. Generally, the rotor blade 10 includes a transition section 90 in between the root section 11 and the airfoil section 20. The airfoil section 20, hereinafter also referred to as the airfoil 20, includes a tip section 12 having a tip 12a. The root 11a and the tip 12a are separated by a span 16, of the rotor blade 10, which follows the shape of the rotor blade 10. A direction along or parallel to the span 16 is referred to as span-wise direction 16d. The tip section 12, including the tip 12a therein, extends from the tip 121 towards the root 11a up to a span-wise position of approx 33.3% (percent), i.e. one third of the total length of the blade 10, as measured from the tip 12a. The tip 12a extends within the tip section 12 towards the root 11a up to a span-wise position of approx. one meter. The rotor blade 10 includes a leading edge section 14 having a leading edge 14a, and a trailing edge section 13 having a trailing edge 13a. The trailing edge section 13 surrounds the trailing edge 13a. Similarly, the leading edge section 14 surrounds the leading edge 14a. A protective shell (not shown in FIG 2) may be mounted on the blade 10, especially around the leading edge 14a.

At each span-wise position perpendicular to the span 16, a chord line 17 that connects the leading edge 14a and the trailing edge 13a can be defined. A direction along or parallel to the chord line 17 is referred to as chord-wise direction 17d. FIG 2 depicts two such chord lines 17 at two different span-wise positions. Furthermore a direction mutually perpendicular to the span-wise direction 16d and to the chord-wise direction 17d is referred to as a flap-wise direction 9d. The rotor blade 10 has a shoulder 18 that is a section of the rotor blade 10 where the chord line 17 has maximum chord length, i.e. in example of FIG 2 at the chord line 17 that is depicted towards the root 11a.

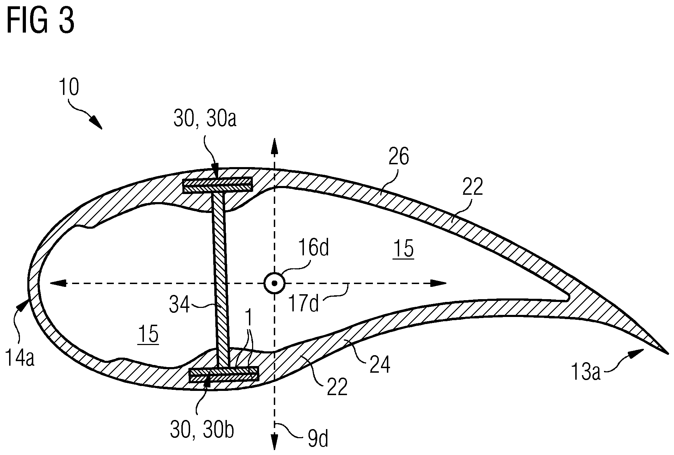

As shown in FIG 3 in combination with FIG 2, in the wind turbine 100, the blade 10 includes a blade shell 22. The blade 10 of the wind turbine 100 may have a 'butterfly blade' construction (not shown) having leeward and windward shells that are separately manufactured and then joined together to form the blade 10, or may have the well known 'integral blade' construction of Siemens as shown in FIG 3, where unlike butterfly blade construction the leeward and windward shells are not separately manufactured. In the integral blade construction the entire shell is manufactured in one-part as an integral shell and thus does not have a separately manufactured leeward and windward side. The blade 10 includes a plurality of spar caps 30, although FIG 3 only shows a pair of spar caps 30, namely 30a and 30b, there may be more spar cap pairs. The spar caps 30a, 30b of the pair are separated and supported by a web 34 forming an 'I'-beam. One spar cap 30 for example the spar cap 30a is integrated in the shell 22 at one side for example the suction side 26 whereas the other spar cap 30 for example the spar cap 30b is integrated in the shell 22 at the other side for example the pressure side 24, as shown in FIG 3.

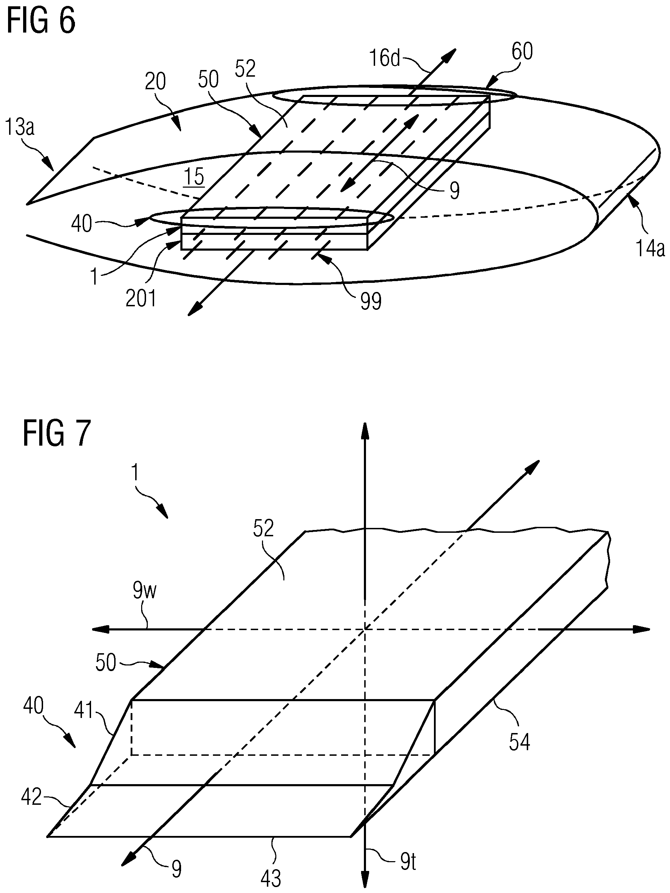

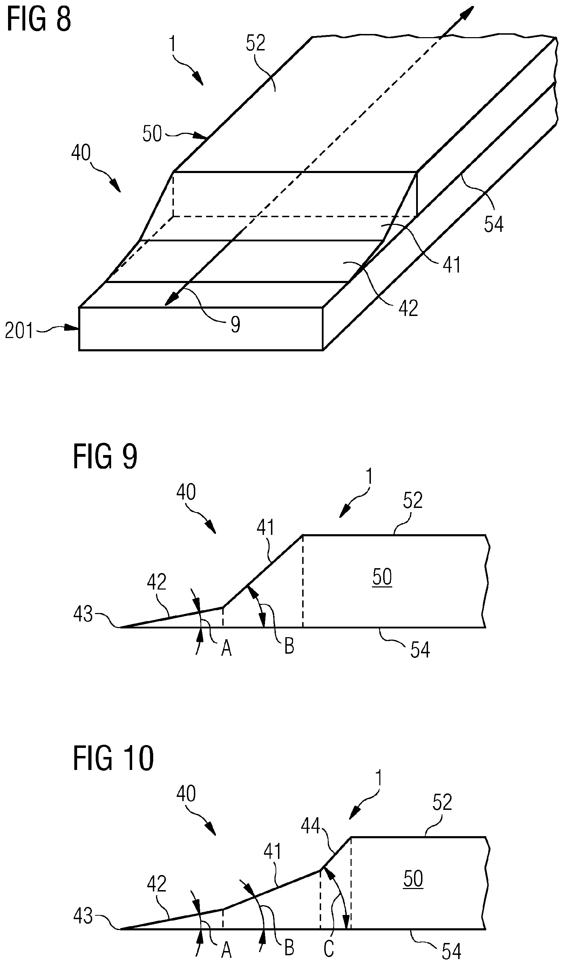

Hereinafter FIG 6 and 7, in combination with FIG 3, have been used to explain the orientation of the spar cap 30, and orientation and configuration of the constituents of the spar cap 30, i.e. the pultruded fibrous composite strip 1 of the present technique. The pultruded fibrous composite strip 1, hereinafter referred to as the strip 1, has a longitudinal axis 9, as shown in FIGs 6 and 7. The strip 1 extends along the longitudinal axis 9, in other words the strip 1 has an elongate structure. The strip 1 has unidirectional fibers 99, for example carbon fibers, extending along the longitudinal axis 9, i.e. in longitudinal direction, of the strip 1. The strip 1 has a first edge region 40 and a second edge region 60 i.e. the two ends of the elongate strip 1 as shown in FIG 6 which depicts the positions of the edge regions 40, 60 with respect to each other. It may be noted that the strip 1 generally extends through a considerable distance of the total span of the blade 10, and the depiction of FIG 6 showing apparently the strip 1 extending only in part of the blade 10 is schematic and simplified for the purpose of simplicity and for ease of understanding. It may also be noted that FIG 7, and later FIGs 8 to 10, depict only one of the edge regions 40, 60, and have been used to explain the depicted first edge region 40, however the same features may be applied to the second edge region 60, when both the edge regions 40, 60 of the strip 1 are tapered in accordance with aspects of the present technique.

As shown in FIG 7 in combination with FIG 6, the strip 1 has an intermediate region 50 that separates, along the longitudinal direction i.e. along the longitudinal axis 9 of the strip 1, the first and the second edge regions 40, 60. The intermediate region 50 has a first planar surface 52 and a second planar surface 54. The planar surfaces 52, 54 are mutually opposed longitudinally extending and parallelly disposed with respect to each other. In the strip 1, a thickness of the strip 1 is determinable or measurable perpendicular to the first and the second planar surfaces 52, 54 i.e. along the axis 9t of FIG 7, whereas a width of the strip 1 is determinable or measurable parallel to the first and the second planar surfaces 52, 54 and perpendicular to the longitudinal direction of the strip 1, i.e. along an axis 9w which is mutually perpendicular to the longitudinal axis 9 of the strip 1 and the axis 9t of the strip 1. In the strip 1, at least one of the first and the second edge regions 40, 60, in example of FIG 7 the first edge region 40, starting from the intermediate region 50 and extending longitudinally, i.e. along the longitudinal axis 9, includes a taper region 41 and a further taper region 42.

As shown in FIG 7, the taper region 41 is disposed in-between the further taper region 42 and the intermediate region 50. The further taper region 42 includes a terminating edge 43 where the strip 1 ends longitudinally. According to the present technique, a slope of the further taper region 42 is different than slope of the taper region 41. For example, in reference to FIG 7, further taper region 42 is tapered between 1:100 and 1:50 while taper region 41 is tapered with angle between 1:75 and 1:25. FIG 9 shows the end region 40 of the strip 1 from a side view i.e. when viewed along the axis 9w of the strip 1. As can be seen in FIG 9, the slope of the taper region 41 represented by angle B is greater than the slope of the further taper region 42 represented by angle A. The strip 1 in the end region 40 has a bottom planar surface that is continuous with the planar surface 54.

The phrase 'taper' and its quantitative measure as used herein are also generally referred to as grade, slope, incline, gradient, mainfall, pitch or rise.

It may be noted that although the end region 40 shown in examples of FIG 7 and 9 have only two differently tapered regions namely the taper region 41 and the further taper region 42, the end region 40 may comprise additional tapered regions, such as additional taper region 44 depicted in FIG 10 in addition to the taper region 41 and the further taper region 42. The additional taper region 44 is located between the further taper region 42 and the intermediate region 50. As can be seen in FIG 10, the slope of the further taper region 42 represented by angle A is less than the slope of the taper region 41 represented by angle B which in turn is less than the slope of the additional taper region 44 represented by angle C. It may further be noted that the end regions 40, 60 may include even more number of tapered regions (not shown) within each of them, i.e. the end region 40 or the end region 60 may have the taper region 41, the further taper region 42 and more than one additional taper regions 43. The slope of each tapered regions, i.e. the taper region 41, the further taper region 42 and multiple additional taper regions 43 increases when viewing from the terminating edge 43 and towards the intermediate region 50.

FIG 8 depicts the strip 1 positioned on top of a conventional strip 201 to form a stack of strips for the spar cap 30. However in another embodiment (not shown), the strip 1 may be positioned on top of a conventional tapered strip 201a of FIG 5 and in yet another embodiment (not shown), the strip 1 may be positioned on top of a similar strip 1 having same or different tapering geometries. The strip 1 of the present technique, and as depicted schematically in examples of FIGs 6 to 10, is incorporated in one or more of the spar caps 30 of FIG 3 which in turn is incorporated in the wind turbine rotor blade 10 of FIG 2. The smoother build-up of sectional laminate axial stiffness (defined as longitudinal stiffness by thickness) at the termination of the profile 1 or strip 1 reduces the interlaminar shear stress and peel forces to be transferred through from the terminating strip 1 or profile 1 to the underlying profile for example a conventional strip 201 in FIG 8.

Although in the present technique, particularly in FIG 8, the stack is shown to comprise only one strip 1, in other embodiment of the present technique, the stack may include two or more such strips 1. Furthermore, when having two or more tapered strips the taperings of the strip 1 i.e. the tapering along the taper region 41 and the further taper region 42 of one of the strips 1 may differ from the tapering along the taper region 41 and the further taper region 42 of one of other strips 1. It may be noted that although in the present disclosure, particularly in FIG 6, only one stack of strip 1 has been depicted to form the spar cap 30, the spar cap 30 may comprise two or more parallelly disposed stacks of the strips 1 placed adjacent to each other and each extending longitudinally.

While the present technique has been described in detail with reference to certain embodiments, it should be appreciated that the present technique is not limited to those precise embodiments.

## Claims

1. A pultruded fibrous composite strip (1) for a spar cap (30) of a wind turbine rotor blade (10), the strip (1) comprising:
- unidirectional fibers (99) extending along a longitudinal direction (9) of the strip (1),
- a first and a second edge regions (40,60) separated in the longitudinal direction (9) of the strip (1) by an intermediate region (50), wherein the intermediate region (50) is defined by a first and a second mutually opposed longitudinally extending and parallelly disposed planar surfaces (52,54), wherein a thickness of the strip (1) is determinable perpendicular to the first and the second planar surfaces (52,54) and a width of the strip (1) is determinable parallel to the first and the second planar surfaces (52,54) and perpendicular to the longitudinal direction (9) of the strip (1),
wherein at least one of the first and the second edge regions (40, 60) comprises at least a taper region (41) and a further taper region (42), wherein the taper region (41) is disposed in-between the further taper region (42) and the intermediate region (50), **characterized in that** the slope of the taper region (41) is constant and the slope of the further taper region (42) is also constant, wherein the constant slope of the further taper region (42) is different than the constant slope of the taper region (41) and wherein the constant slope of the taper region (41) is greater than the constant slope of the further taper region (42).

2. The pultruded fibrous composite strip (1) according to claim 1, wherein each of the first and the second edge regions (40, 60) comprises the taper region (41) and the further taper region (42).

3. The pultruded fibrous composite strip (1) according to claim 1 or 2, wherein the slope of the taper region (41) is between 1:75 and 1:25 and the slope of the further taper region (42) is between 1:100 and 1:50.

4. The pultruded fibrous composite strip (1) according to any of claims 1 to 3, wherein the unidirectional fibers (99) are carbon fibers.

5. A spar cap (30) for a wind turbine rotor blade (10), wherein the spar cap (30) comprises at least one pultruded fibrous composite strip (1) according to any of claims 1 to 4.

6. The spar cap (30) according to claim 5, wherein the spar cap (30) comprises at least two pultruded fibrous composite strips (1), wherein each of the pultruded fibrous composite strip (1) is according to any of claims 1 to 4 and wherein the at least one of the pultruded fibrous composite strips (1) has different taperings in its taper region (41) and/or further taper region (42) compared to the taperings in the taper region (41) and/or the further taper region (42) of at least one of the other pultruded fibrous composite strips (1) .

7. A wind turbine rotor blade (10) comprising at least one spar cap (30), wherein the spar cap (30) comprises at least one pultruded fibrous composite strip (1) according to any of claims 1 to 4, and wherein the first and the second edge regions (40, 60) of the pultruded fibrous composite strip (1) are separated in a spanwise direction (16d) of the blade (10) .

## Patentansprüche

1. Stranggezogener Faserverbundstreifen (1) für einen Holmgurt (30) eines Windturbinenrotorblatts (10), wobei der Streifen (1) Folgendes umfasst:
- unidirektionale Fasern (99), die in einer Längsrichtung (9) des Streifens (1) verlaufen,
- einen ersten und einen zweiten Kantenbereich (40, 60), die in Längsrichtung (9) des Streifens (1) durch einen Zwischenbereich (50) getrennt sind, wobei der Zwischenbereich (50) durch eine erste und eine zweite in Längsrichtung verlaufende, planare Fläche (52, 54) definiert ist, die einander gegenüber und parallel zueinander angeordnet sind, wobei eine Dicke des Streifens (1) senkrecht zur ersten und zweiten planaren Fläche (52, 54) und eine Breite des Streifens (1) parallel zur ersten und zweiten planaren Fläche (52, 54) und senkrecht zur Längsrichtung (9) des Streifens (1) bestimmbar ist,
wobei
der erste und/oder der zweite Kantenbereich (40, 60) zumindest einen Abschrägungsbereich (41) und einen weiteren Abschrägungsbereich (42) umfasst, wobei der Abschrägungsbereich (41) zwischen dem weiteren Abschrägungsbereich (42) und dem Zwischenbereich (50) angeordnet ist, **dadurch gekennzeichnet, dass** die Neigung des Abschrägungsbereichs (41) und die Neigung des weiteren Abschrägungsbereichs (42) konstant ist, wobei sich die konstante Neigung des weiteren Abschrägungsbereichs (42) von der des Abschrägungsbereichs (41) unterscheidet und die konstante Neigung des Abschrägungsbereichs (41) stärker ist als die des weiteren Abschrägungsbereichs (42).

2. Stranggezogener Faserverbundstreifen (1) nach Anspruch 1, wobei sowohl der erste als auch der zweite Kantenbereich (40, 60) den Abschrägungsbereich (41) und den weiteren Abschrägungsbereich (42) umfasst.

3. Stranggezogener Faserverbundstreifen (1) nach Anspruch 1 oder 2, wobei die Neigung des Abschrägungsbereichs (41) zwischen 1:75 und 1:25 und die des weiteren Abschrägungsbereichs (42) zwischen 1:100 und 1:50 liegt.

4. Stranggezogener Faserverbundstreifen (1) nach einem der Ansprüche 1 bis 3, wobei es sich bei den unidirektionalen Fasern (99) um Kohlenstofffasern handelt.

5. Holmgurt (30) für ein Windturbinenrotorblatt (10), wobei der Holmgurt (30) mindestens einen stranggezogenen Faserverbundstreifen (1) nach einem der Ansprüche 1 bis 4 umfasst.

6. Holmgurt (30) nach Anspruch 5, wobei der Holmgurt (30) mindestens zwei stranggezogene Faserverbundstreifen (1) umfasst, wobei jeder der stranggezogenen Faserverbundstreifen (1) einem der Ansprüche 1 bis 4 entspricht und der mindestens eine der stranggezogenen Faserverbundstreifen (1) im Vergleich zu den Abschrägungen im Abschrägungsbereich (41) und/oder weiteren Abschrägungsbereich (42) mindestens eines der anderen stranggezogenen Faserverbundstreifen (1) eine andere Abschrägung in seinem Abschrägungsbereich (41) und/oder weiteren Abschrägungsbereich (42) aufweist.

7. Windturbinenrotorblatt (10) mit mindestens einem Holmgurt (30), wobei der Holmgurt (30) mindestens einen stranggezogenen Faserverbundstreifen (1) nach einem der Ansprüche 1 bis 4 umfasst und der erste und der zweite Kantenbereich (40, 60) des stranggezogenen Faserverbundstreifens (1) in Spannweitenrichtung (16d) des Blatts (10) getrennt sind.

## Revendications

1. Bande composite fibreuse pultrudée (1) pour un embout (30) d'une pale de rotor d'éolienne (10), la bande (1) comprenant :
- des fibres unidirectionnelles (99) s'étendant le long d'une direction longitudinale (9) de la bande (1),
- une première et une seconde régions de bord (40, 60) séparées dans la direction longitudinale (9) de la bande (1) par une région intermédiaire (50), dans laquelle la région intermédiaire (50) est définie par une première et une seconde surfaces planes disposées de manière parallèle et s'étendant de manière longitudinale de manière réciproquement opposée (52, 54), dans laquelle une épaisseur de la bande (1) peut être déterminée de manière perpendiculaire à la première et à la seconde surfaces planes (52, 54) et une largeur de la bande (1) peut être déterminée de manière parallèle à la première et à la seconde surfaces planes (52, 54) et de manière perpendiculaire à la direction longitudinale (9) de la bande (1),
dans laquelle au moins une de la première et de la seconde régions de bord (40, 60) comprend au moins une région amincie (41) et une autre région amincie (42), dans laquelle la région amincie (41) est disposée entre l'autre région amincie (42) et la région intermédiaire (50), **caractérisé en ce que** la pente de la région amincie (41) est constante, et la pente de l'autre région amincie (42) est également constante, dans laquelle la pente constante de l'autre région amincie (42) est différente de la pente constante de la région amincie (41) et dans laquelle la pente constante de la région amincie (41) est supérieure à la pente constante de l'autre région amincie (42).

2. Bande composite fibreuse pultrudée (1) selon la revendication 1, dans laquelle chacune de la première et de la seconde régions de bord (40, 60) comprend la région amincie (41) et l'autre région amincie (42).

3. Bande composite fibreuse pultrudée (1) selon la revendication 1 ou 2, dans laquelle la pente de la région amincie (41) est comprise entre 1:75 et 1:25 et la pente de l'autre région amincie (42) est comprise entre 1:100 et 1:50.

4. Bande composite fibreuse pultrudée (1) selon l'une quelconque des revendications 1 à 3, dans laquelle les fibres unidirectionnelles (99) sont des fibres de carbone.

5. Embout (30) pour une pale de rotor d'éolienne (10), dans lequel l'embout (30) comprend au moins une bande composite fibreuse pultrudée (1) selon l'une quelconque des revendications 1 à 4.

6. Embout (30) selon la revendication 5, dans lequel l'embout (30) comprend au moins deux bandes composites fibreuses pultrudées (1), dans lequel chacune des bandes composites fibreuses pultrudées (1) est selon l'une quelconque des revendications 1 à 4, et dans lequel la au moins une des bandes composites fibreuses pultrudées (1) présente différentes amincissements dans sa région amincie (41) et/ou son autre région amincie (42) par rapport aux amincissements dans la région amincie (41) et/ou l'autre région amincie (42) d'au moins une des autres bandes composites fibreuses pultrudées (1).

7. Pale de rotor d'éolienne (10) comprenant au moins un embout (30), dans laquelle l'embout (30) comprend au moins une bande composite fibreuse pultrudée (1) selon l'une quelconque des revendications 1 à 4, et dans laquelle la première et la seconde régions de bord (40, 60) de la bande composite fibreuse pultrudée (1) sont séparées dans une direction de l'envergure (16d) de la pale (10).
